Europäisches Patentamt

European Patent Office

Office européen des brevets

(11) Publication number: **0 233 457 B1**

# EUROPEAN PATENT SPECIFICATION

(45) Date of publication of patent specification: **10.06.92**   (51) Int. Cl.5: **H04M 11/00**

(21) Application number: **87100179.8**

(22) Date of filing: **09.01.87**

(54) **Improvements to an operation control system of one or more apparatuses.**

(30) Priority: **15.01.86 IT 6703286**

(43) Date of publication of application:
**26.08.87 Bulletin  87/35**

(45) Publication of the grant of the patent:
**10.06.92 Bulletin  92/24**

(84) Designated Contracting States:
**AT CH DE ES FR GB IT LI**

(56) References cited:
**CH-A- 395 202**
**GB-A- 2 097 223**
**US-A- 4 126 762**

(73) Proprietor: **Tecnoenergia BY TEL s.r.l.**
**C.so Brescia, 89**
**I-10152 Torino(IT)**

(72) Inventor: **Bo, Giorgio, Ing.**
**C.so Dante 124**
**I-10100 Torino(IT)**
Inventor: **Milanese,Elio**
**Via Martino Bassi 9**
**I-20148 Milan(IT)**

(74) Representative: **Mayer, Hans Benno, Dipl.-Ing.**
**de Dominicis & Mayer Piazzale Marengo 6**
**I-20121 Milano(IT)**

## Description

The present invention refers to a system to control the operation of one or more apparatus or plants, each one having at least a telephone set coupled to the telephone systemcontrol system for one or more apparatuses, each one coupled to at least a telephone set, connected to the telephone system.

The control system includes:

- one or more peripheral control units, each one coupled to a relevant apparatus or plant to be controlled, and coupled to one or more electrical sensors, in turn coupled to the controlled apparatus or plant, each one of the sensors providing at its output electrical data signals indicative of controlled parameters, and which may be coupled to the telephone line connected to a the telephone set located in the same building where the apparatus or plant to be controlled is located;

- a central control unit, which may be coupled to the telephone line, and apt to send signals to and receive signals from each peripheral control unit.

Each peripheral control unit includes switching means coupled to the the telephone set and to the telephone line and apt to decouple the telephone set from the telephone line and to allow that the signals from the peripheral control unit are sent in the telephone line.

A control system of the above said type is e.g. described in the Italian Patent Application N. 67427-A/81 filed in the name of the same Applicant on march 27, 1981.

The control system described in the above said Patent Application includes switching means connected to the telephone set and to the telephone system, apt to:

a) decouple the said telephone set from the telephone system at the first calling pulse received on the said telephone line;

b) decouple the said telephone set from the telephone system and permit to the peripheral control unit to send signals to the telephone line as soon as a further calling pulse is received via said telephone line, with a delay comprised within a minimum and a maximum predetermined value, and

c) decouple the said peripheral control unit from said telephone line and connect again the telephone set to the line as soon as the transmission of information, via the telephone line, between the peripheral and the central unit is over.

A control system of the described type, applied e.g. to central heating plants of buildings, allows the automatic remote control of the plant operation as well as a quick corrective action by the maintenance personnel, as soon as failures or malfunctionings happen, without the need of periodical visits to the plant, and without the need to arrange an ad hoc telephone line for each controlled apparatus.

As described in the cited Patent Application, the service call from the central control unit to a peripheral control unit comprises two subsequent calls, each one consisting of one pulse only, the second one being sent a predetermined time, e.g. twenty seconds, after the first. The decoupling of the telephone set from the telephone line at the first calling pulse has the object not to disturb the telephone user in the case that the call is directed not to him but to the control unit.

The system, as described in the cited Patent Application, proved to operate correctly every time the call pulses sent out by the telephone exchange did have the correct length and timings, as normally due. In fact normally a pulse lasts for a second and repeats every fourth second. In some cases, nevertheless, the initial pulse lasts less than one second and also the delay between the first and the second pulse is of variable length. As a consequence in some cases the peripheral control unit recognized a user call as a service call and viceversa, with obvious inconvenience.

A system for accumulating data over non dedicated telephone lines is described in the US Patent No 4,126,762, wherein a telephone calling signal from a central station initiates the connection of a remote terminal, including a data accumulator, at a subscriber's station to a non dedicated telephone line for reading by a billing processor computer at the central station. The system, as described in the cited patent, if used for the purpose of the present application, will show the same inconveniences as the system disclosed in the above cited italian application and already discussed.

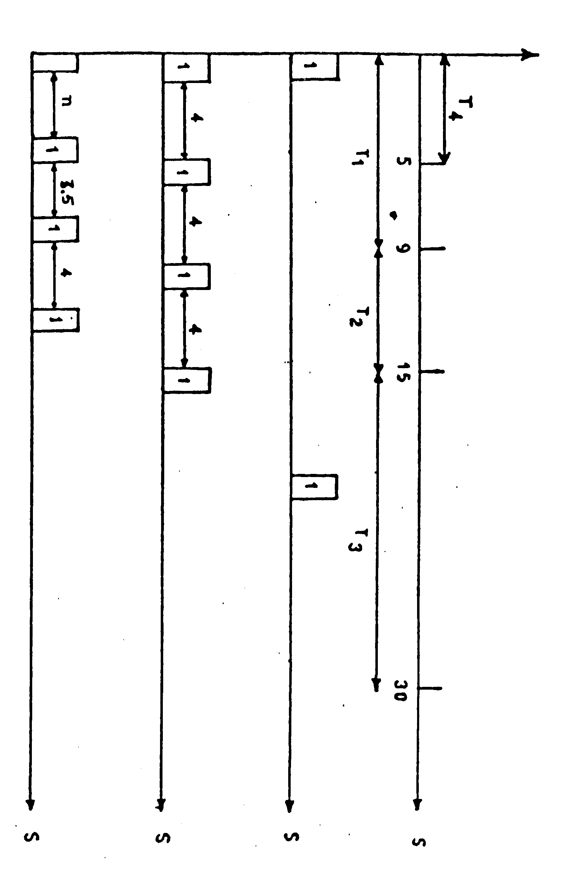

In fact, the system described in US Patent No 4,126,762 would not work correctly in case of an abnormal user call; in fact let us suppose that an abnormal user call is received, having the following pattern: a first ringing call of 0.4 seconds; a pause of 3.5 seconds; a second ringing call of 1 second; a pause of 4 seconds; a third ringing call of 1 second. It has been experienced that such a pattern is quite common in Italy; it complies with the pattern shown in line 4 of the figure of the present Application.

In such a call the second ringing pulse is received 3.9 seconds after the beginning of the first one and ends 4.9 seconds after said beginning; the third pulse is received 8.9 seconds after the said beginning. In other words the second pulse is received "before the normal five seconds delay", and the third one is received "after 8 seconds": it is therefore clear that such a call is considered a service call and that the answering apparatus will immediately seize the line and prevent telephone from responding (see lines 21-29, column 3).

From Swiss Patent n. 395 202 a procedure is known to interrogate by telephone a plurality of metering apparatuses in order to ascertain the consumptions of electricity, water, etc. The procedure described is very similar and shows the same drawbacks.

It is an object of the present invention to describe a controlling system of the specified type, apt to solve in a simple way the said problem, so avoiding the cited inconveniences.

With this aim in view, the subject of the present invention is a system to control the operation of one or more apparatus or plants, each one having at least a telephone set coupled to the telephone system, said system comprising:
- one or more peripheral control units, each one coupled to a relevant apparatus or plant to be controlled, and coupled to one or more electrical sensors, in turn coupled to the controlled apparatus or plant, each one of the sensors providing at its output electrical data signals indicative of controlled parameters, and which may be coupled to the telephone line connected to a the telephone set located in the same building where the apparatus or plant to be controlled is located;
- a central control unit, which may be coupled to the telephone line, and apt to send signals to and receive signals from each peripheral control unit,

wherein each peripheral control unit includes switching means coupled to the the telephone set and to the telephone line and apt to decouple the telephone set from the telephone line and to allow that the signals from the peripheral control unit are sent in the telephone line, characterized in that said switching means are arranged in particular to:

a) ascertain whether by means of said telephone line calling pulses are received during three subsequent time periods starting from the start of the first calling pulse received, the first of said time periods being greater that the normal lenght of time corresponding to two calling pulses (9 seconds);

b) decouple for a predetermined period of time, starting from the start of the first calling pulse received, the telephone set from the telephone line;

c) in the case that during the second of said time periods at least one calling pulse is received, restore the initial situation of wiring between said telephone line, said telephone set and said peripheral unit;

d) in the case that during the second of said time periods no calling pulses are received, and on the contrary at least one pulse is received during the third of said time periods, let said telephone set decoupled from the line and allow that the signals from the peripheral control unit are sent in the line, and

e) restore the initial situation of wiring between said telephone line, said telephone set and said peripheral unit when the transmission of information between peripheral and central unit by means of the telephone line is over.

Features and advantages of the control system according to the invention will be clear from the following description, which is made referring to the attached drawings, which are supplied only as a non limiting example, and where:
the single figure shows schematically the temporal succession of the events, starting from the time point when a call is received by means of the telephone line in a control system according to the invention.

In the figure four horizontal lines are drawn; the time increases from the left to the right.

On the top line three subsequent time periods are represented, the first one (T1) of 9 seconds, the second one (T2) of 6 seconds and the third (T3) of 15 seconds; a time period (T4) of 5 seconds starting from the zero time point is also represented.

The operation of peripheral control unit switching system is the following:
as soon as the peripheral unit detects the first pulse of a telephone call (zero time point), it decouples the user telephone set so that, should the call be a service call, the set remains silent;
after 5 seconds it connects the telephone set again;
after a total of 9 seconds (first time interval T1) and during the subsequent 6 seconds (second time interval T2, from the 9th to the 15th second starting from the zero time point) the unit watches the line:
if a calling pulse is detected, the unit decides that it is the case of a user call, restores the initial status and connects again the user set to the line;
if during the second time interval no pulses have been detected , it watches the lines for a further 15 seconds (third time interval T3, from the 15th second to the 30th second starting from the zero time point); if at least one pulse is detected, it decides that it is the case of a service call, decouples once more the user set and sends to the central control unit the plant's data detected by the sensors; when the shake hand is over it connects the user set to the line again;
if on the contrary during the third time interval T3 no pulses have been detected, the unit restores the initial status: i.e. if a pulse is received after a total of 30 seconds, it is considered as a starting pulse and the cycle starts again from the beginning.

In the second line of the figure there are represented the two typical pulses of a service call from the central control unit;

in the third line of the figure there are represented four typical pulses of a user call on the line;

and in the fourth line of the figure there are represented four pulses of an anomalous user call, showing first pulse length of 0.4 seconds, the second pulse arriving after 3.5 seconds delay instead of 4 seconds. Please note that the length of the first pulse may be variable, according to the type of anomaly, ranging from a few milliseconds up to one second, and that the time delay between the first pulse and the second one may vary from less than one second to the four seconds of a regular call (in the figure such a variable delay has been indicated with "n").

As it can be understood immediately from the figure, the behaviour pattern of the control system according to the invention, which represents the result of the practical experiences made on many dozens of different cases, shows a much higher safety factor if compared to that described in the cited Patent Application 67427/A-81; it can correctly decide, even with calling patterns different from the regular ones, if the incoming call is a user or a service call.

The behaviour of the peripheral control unit may be summarized as follows:

- it decouples the user set for the first 5 seconds starting from the zero time point (start of the first calling pulse);
- if and only if the listening during the first and the third time period are affirmative, it decouples the user set for the time necessary to perform the connection to the central control unit;
- in the contrary case (affirmative listening during the second period or negative listening during the third period) it restores to the initial status, waiting again for a starting pulse.

General arrangement of the devices is the same as described in the above said Patent Application 67427-A/81; the switching means instead are substantially like those described in the Italian Patent Application N. 67395-A/82 filed on march 26, 1982 in the name of the same Applicant.

As stated also in the cited Patent Application N. 67427-A/81, the peripheral control unit may also include a second unit apt to call the central control unit in case of emergency condition which require an immediate action without waiting for the periodic control call from the central control unit.

Furthermore the case may happen where two peripheral control units are located in the same building and connected to the same telephone set; in this case, when one of them calls the central control unit in emergency condition, the second peripheral control unit may equivocate considering the call as directed to itself, with dangerous consequences.

In order to avoid such an inconvenience, the calling peripheral control unit may be advantageously adapted to wait for a suitable time period (e.g. 20 seconds) between the last but one digit and the very last digit of the called telephone number. It has been verified that in this way no malfunctioning takes place.

Of course many variations are possible to the circuitry described; as an example it is possible that in the data transmission procedure between peripheral control unit and central control unit, instead of waiting for a calling pulse during the third time period, wherein then the central control unit calls the peripheral one in order to receive the data, as soon as no pulse is detected during the second time period, the peripheral control unit calls the central one and sends the data. Of course in this case the peripheral control unit shall be able to dial telephone numbers and to recognize the free and busy tones received from the telephone system.

Another variation may be to lengthen the described time periods, so that e.g. during the first and the third period more than one pulse may arrive, in order to improve the reliability of the connection between peripheral and central units, since during the initial part of a telephone call not always to a calling pulse detected by the calling device corresponds an equivalent arriving pulse detected by the receiving device.

**Claims**

1. System to control the operation of one or more apparatus or plants, each one having at least a telephone set coupled to the telephone system, said system comprising:
   - one or more peripheral control units, each one coupled to a relevant apparatus or plant to be controlled, and coupled to one or more electrical sensors, in turn coupled to the controlled apparatus or plant, each one of the sensors providing at its output electrical data signals indicative of controlled parameters, and which may be coupled to the telephone line connected to the telephone set located in the same building where the apparatus or plant to be controlled is located;
   - a central control unit, which may be coupled to the telephone line, and apt to send signals to and receive signals from each peripheral control unit, wherein each peripheral control unit includes switching means coupled to the the telephone set and to the telephone line and apt to decouple the telephone set from the telephone line and to allow that the signals from the peripheral control unit are sent on the telephone line, characterized in that

said switching means are arranged in particulars :

    a) to ascertain whether by means of said telephone line calling pulses are received during three subsequent time periods starting from the start of the first calling pulse received, the first of said time periods being greater that the normal length of time corresponding to two calling pulses (9 seconds);

    b) to decouple for a predetermined period of time, starting from the start of the first calling pulse received, the telephone set from the telephone line;

    c) in the case that during the second of said time periods at least one calling pulse is received, to restore the initial situation of wiring between said telephone line, said telephone set and said peripheral unit;

    d) in the case that during the second of said time periods no calling pulses are received, and on the contrary at least one pulse is received during the third of said time periods, to decouple said telephone set from the line and allow that the signals from the peripheral control unit are sent on the line, and

    e) restore the initial situation of wiring between said telephone line, said telephone set and said peripheral unit when the transmission of information between peripheral and central unit by means of the telephone line is over.

2. System to control the operation of one or more apparatus or plants, according to claim 1, characterized in that said second period of time is of about 6 seconds.

3. System to control the operation of one or more apparatus or plants, according to any one of the preceding claims, characterized in that said third period of time is of about 15 seconds.

4. System to control the operation of one or more apparatus or plants, according to claim 1, characterized in that said predetermined period of time is shorter than said first period of time.

5. System to control the operation of one or more apparatus or plants, according to claim 4, characterized in that said predetermined period of time is of about 5 seconds.

6. System to control the operation of one or more apparatus or plants, according to any one of the preceding claims, characterized in that if no pulses are detected during said third period of time, said peripheral control unit resets to the status existing before the arrival of the first calling pulse.

7. System to control the operation of one or more apparatus or plants, each one having at least a telephone set coupled to the telephone system, said system comprising:

    - one or more peripheral control units, each one coupled to a relevant apparatus or plant to be controlled, and coupled to one or more electrical sensors, in turn coupled to the controlled apparatus or plant, each one of the sensors providing at its output electrical data signals indicative of controlled parameters, and which may be coupled to the telephone line connected to a the telephone set located in the same building where the apparatus or plant to be controlled is located;

    - a central control unit, which may be coupled to the telephone line, and apt to send signals to and receive signals from each peripheral control unit,

wherein each peripheral control unit includes switching means coupled to the telephone set and to the telephone line and apt to decouple the telephone set from the telephone line and to allow that the signals from the peripheral control unit are sent in the telephone line,

characterized in that said peripheral control unit includes a second peripheral unit arranged to call, in the case that predetermined conditions are verified, the central control unit, and in the case that two peripheral units are coupled to the same telephone line, in order to avoid that the call of one of them disturbs the operation of the other, the calling peripheral unit includes means arranged to wait for a predetermined period of time before dialling the last digit of the telephone number of the called unit.

8. System to control the operation of one or more apparatus or plants, according to claim 7, characterized in that said predetermined period of time is of at least 20 seconds.

9. System to control the operation of one or more apparatus or plants, according to claim 7, characterized in that said peripheral control unit is arranged

a) in the case that during the second period of time no calling pulses are detected, to decouple said telephone set from the telephone line and to dial at least a telephone number corresponding to said central control unit and in the case that said central unit aknowledges the call, to allow that the signals from the peripheral unit are sent on the line, and

b) to restore the initial situation of wiring between said telephone line, said telephone set and said peripheral unit when the transmission of information between peripheral and central unit by means of the telephone line is over.

## Revendications

1. Système de commande de fonctionnement d'un ou de plusieurs appareils ou installations, dont chacun possède au moins un poste téléphonique relié au système téléphonique, ledit système comprenant :
   - une ou plusieurs unités de commande périphériques, dont chacune est reliée à un appareil ou installation appropriée pour être commandé, et reliée à un ou plusieurs capteurs électriques, reliés à leur tour à l'appareil ou l'installation commandée, chacun des capteurs fournissant à leur sortie des signaux électriques de données indiquant les paramètres contrôlés, et qui peuvent être reliés à la ligne téléphonique reliée eu poste téléphonique placé dans le même bâtiment où l'appareil ou l'installation à commander est placé ;
   - une unité de commande centrale, qui peut être reliée à la ligne téléphonique et apte à envoyer des signaux à et à recevoir des signaux de chaque unité de commande périphérique,

dans lequel chaque unité de commande périphérique comprend des moyens de commutation reliés au poste téléphonique et à la ligne téléphonique et aptes à découpler le poste téléphonique de la ligne téléphonique et pour permettre que les signaux provenant de l'unité de commande périphérique soient émis sur la ligne téléphonique, caractérisé en ce que

lesdits moyens de commutation sont disposés en particulier

a) pour établir si, au moyen de ladite ligne téléphonique, des impulsions d'appel sont reçues pendant les trois périodes de temps subséquentes en commençant depuis le début de la première impulsion d'appel reçue, la première desdites périodes de temps étant plus grande que la longueur normale de temps correspondant à deux impulsions d'appel (3 secondes);

b) pour découpler pendant une période de temps prédéterminée, en commençant par le début de la première impulsion d'appel reçue, le poste téléphonique de la ligne téléphonique;

c) dans le cas où durant la deuxième desdites périodes de temps au moins une impulsion d'appel est reçue, pour rétablir la situation initiale de câblage entre ladite ligne téléphonique, ledit poste téléphonique et ladite unité périphérique;

d) dans le cas où pendant la deuxième desdites périodes de temps aucune impulsion d'appel n'est reçue, et au contraire au moins une impulsion est reçue pendant la troisième desdites périodes de temps, pour découpler ledit poste téléphonique de la ligne et permettre que les signaux provenant de l'unité de commande périphérique soient émis sur la ligne, et

e) rétablir la situation initiale de câblage entre ladite ligne téléphonique, ledit poste téléphonique et ladite unité périphérique lorsque la transmission d'informations entre les unités périphérique et centrale au moyen de la ligne téléphonique est terminée.

2. Système de commande du fonctionnement d'un ou de plusieurs appareils ou installations, selon la revendication 1, caractérisé en ce que la deuxième période de temps dure environ 6 secondes.

3. Système de commande du fonctionnement d'un ou de plusieurs appareil ou installations, selon l'une des revendications precédentes, caractérisé en ce que ladite troisième période de temps dure environ 15 secondes.

4. Système de commande du fonctionnement d'un ou de plusieurs appareils ou installations, selon la revendication 1, caractérisé en ce que ladite période de temps prédéterminée est plus courte que la première période de temps.

5. Système de commande du fonctionnement d'un ou de plusieurs appareils ou installations; selon la revendication 4, caractérisé en ce que ladite période de temps prédéterminée dure environ 5 secondes.

6. Système de commende du fonctionnement d'un ou de plusieurs appareils ou installations, selon l'une des revendications précédentes, caractérisé en ce que, si aucune impulsion n'est détectée pendant ladite troisième période de temps, ladite unité de commande périphérique rétablit l'état existant avant l'arrivée de la première impulsion d'appel.

7. Système de commande du fonctionnement d'un ou de plusieurs appareils ou installations, dont chacun possède au moins un poste téléphonique relié au système téléphonique, ledit système comprenant :
   - une ou plusieurs unités de commande périphériques, dont chacune est reliée à un appareil ou installation approprié à être commandé, et reliée a un ou plusieurs capteurs électriques, reliés à leur tour à l'appareil ou l'installation commandé, chacun des capteurs fournissant à sa sortie des signaux électriques de données indiquant les paramètres contrôlés, et qui peuvent être reliés à la ligne téléphonique reliée à un poste téléphonique situé dans le même bâtiment où l'appareil ou l'installation a commander est placé ;
   - une unité de commande centrale, qui peut être reliée à la ligne téléphonique, et apte à émettre des signaux vers et à recevoir des signaux de chaque unité de commande périphérique,

dans lequel chaque unité de commande périphérique comprend des moyens de commutation reliés au poste téléphonique et à la ligne téléphonique et aptes à découpler le poste téléphonique de la ligne téléphonique et à permettre que des signaux provenant de l'unité de commande périphérique soient émis dans la ligne téléphonique,

caractérisé en ce que ladite unité de commande périphérique comprend une seconde unité périphérique disposés à appeler, dans le cas où des conditions prédéterminées sont vérifiées; l'unité de commande centrale, et dans le cas où deux unités périphériques sont reliées à le même ligne téléphonique, pour éviter que l'appel de l'une d'elles perturbe le fonctionnement de l'autre, l'unité périphérique appelante comprend des moyens prévus pour attendre pendant une période de temps prédéterminée avant de composer le dernier chiffre du numéro de téléphone de l'unité appelée.

8. Système de commande du fonctionnement d'un ou de plusieurs appareils ou installations, selon la revendication 7, caractérisé en ce que ladite période de temps prédéterminée dure au moins 20 secondes.

9. Système de commande de fonctionnement d'un ou de plusieurs appareils ou installations, selon la revendication 7, caractérisé en ce que ladite unité de commande périphérique est disposée

   a) dans le cas où, pendant la deuxième période de temps , aucune impulsion d'appel n'est détectée, pour découpler ledit poste téléphonique de la ligne téléphonique, et pour composer au moins un numéro de téléphone correspondent à ladite unité de commande centrale, et dans le cas où ladite unité centrale accuse réception de l'appel, pour permettre que les signaux provenant de l'unité périphérique soient émis sur le ligne et,
   b) pour rétablir la situation initiale de câblage entre ladite ligne téléphonique, ledit poste téléphonique et ladite unité périphérique lorsque la transmission d'informations entre les unités périphérique et centrale au moyen de la ligne téléphonique est terminée.

**Patentansprüche**

1. System zur Kontrolle der Taetigkeit eines oder mehrerer Geraete oder Anlagen, wobei jedes wenigstens ein Telefongeraet aufweist, das mit dem Telefonsystem verbunden ist, wobei das System:
   - eine oder mehrere Nebenstellenkontrolleinheiten aufweist und jede mit einem entsprechenden, zu kontrollierenden Geraet oder einer Anlage und mit einem oder mehreren elektrischen Sensoren verbunden ist, die ihrerseits mit dem kontrollierten Geraet oder der Anlage verbunden sind und jeder der Sensoren an seinem Ausgang elektrische Datensignale zur Verfuegung stellt, die die kontrollierten Parameter anzeigen und an die Telefonleitung anlegbar sind, die mit dem Telefongeraet, das im gleichen Gebaeude vorgesehen ist, verbunden ist, in dem das zu kontrollierende Geraet oder die zu kontrollierende Anlage angeordnet ist,
   - mit einer zentralen Kontrolleinheit, die mit der Telefonleitung verbindbar ist und geeignet ist, Signale an eine Nebenstellenkontrolleinheit zu senden und Signale von jeder Nebenstellenkontrolleinheit zu empfangen,
   - wobei jede Nebenstellenkontrolleinheit Schalteinrichtungen aufweist, die mit dem Telefongeraet und der Telefonleitung verbunden sind und geeignet sind, das Telefongeraet von der Telefonleitung abzukoppeln und es ermoeglichen, dass die Signale von der Nebenstellenkontrolleinheit an die Telefonleitung uebertragen werden, **dadurch gekennzeichnet**, dass die Schalteinrichtungen so angeordnet sind, dass

a) festgestellt wird, ob ueber die Telefonleitung Rufimpulse waehrend drei aufeinanderfolgender Zeitperioden empfangen werden, beginnend mit dem Empfang des ersten Rufimpulses, wobei die erste dieser Zeitperioden groesser ist als die normale Zeitdauer, die zwei Rufimpulsen (9 Sekunden) entspricht;

b) das Telefongeraet fuer eine vorbestimmte Zeitperiode von der Telefonleitung abgekoppelt wird, beginnend mit dem ersten erhaltenen Rufimpuls;

c) bei Empfang von wenigstens einem Rufimpuls waehrend der zweiten Zeitperiode, der Anfangszustand der Verkabelung zwischen der Telefonleitung, dem Telefongeraet und der Nebenstelleneinheit wieder hergestellt wird;

d) fuer den Fall, dass waehrend der zweiten Zeitperiode keine Rufimpulse empfangen werden und im Gegensatz dazu wenigstens ein Impuls waehrend der dritten Zeitperiode empfangen wird, ein Abkoppeln des Telefongeraetes von der Leitung erfolgt und es ermoeglicht wird, dass Signale von der Nebenstellenkontrolleinheit an die Leitung angelegt werden; und

e) ein Wiederherstellen der Ausgangssituation der Verkabelung zwischen der Telefonleitung, dem Telefongeraet und der Nebenstelleneinheit erfolgt, wenn die Uebertragung von Informationen zwischen der Nebenstelleneinheit und der Zentraleinheit ueber die Telefonleitung beendet ist.

2. System zur Kontrolle der Taetigkeit eines oder mehrerer Geraete oder Anlagen, nach Patentanspruch 1, **dadurch gekennzeichnet**, dass die zweite Zeitperiode ungefaehr 6 Sekunden betraegt.

3. System zur Kontrolle der Taetigkeit eines oder mehrerer Geraete oder Anlagen nach den vorangegangenen Anspruechen, **dadurch gekennzeichnet**, dass die dritte Zeitperiode ungefaehr 15 Sekunden betraegt.

4. System zur Kontrolle der Taetigkeit eines oder mehrerer Geraete oder Anlagen, nach Patentanspruch 1, **dadurch gekennzeichnet**, dass die vorgegebene Zeitperiode kuerzer ist als die erste Zeitperiode.

5. System zur Kontrolle der Taetigkeit eines oder mehrerer Geraete oder Anlagen, nach Patentanspruch 4, **dadurch gekennzeichnet**, dass die vorgegebene Zeitperiode ungefaehr 5 Sekunden betraegt.

6. System zur Kontrolle der Taetigkeit eines oder mehrerer Geraete oder Anlagen nach einem der vorangegangenen Ansprueche, **dadurch gekennzeichnet**, dass bei Nichtfestellen von Impulsen waehrend des dritten Zeitintervalls die Nebenstellenkontrolleinheit in den Zustand zurueckschaltet, der vor Ankunft des ersten Rufimpulses vorlag.

7. System zur Kontrolle der Taetigkeit eines oder mehrerer Geraete oder Anlagen, die wenigstens ein Telefongeraet aufweisen, das mit dem Telefonsystem verbunden ist und das System:

- eine oder mehrere Nebenstellenkontrolleinheiten aufweist, von denen jede mit einem zu kontrollierenden Geraet oder einer Anlage verbunden ist und mit einem oder mehreren elektrischen Sensoren gekoppelt ist, die ihrerseits mit den zu kontrollierenden Geraeten oder Anlage verbunden sind und jeder Sensor an seinem Ausgang elektrische Datensignale liefert, die die kontrollierten Parameter angeben und mit der Telefonleitung verbindbar sind, die mit dem Telefongeraet verbunden ist, das im gleichen Gebaeude angeordnet ist, in welchem das zu kontrollierende Geraet oder die zu kontrollierende Anlage angeordnet sind,

- mit einer zentralen Kontrolleinheit, die mit der Telefonleitung verbindbar ist und geeignet ist, Signale an jede Nebenstellenkontrolleinheit zu senden und Signale von jeder Nebenstellenkontrolleinheit zu empfangen,

- wobei jede Nebenstellenkontrolleinheit Schalter aufweist, die mit dem Telefongeraet und mit der Telefonleitung verbunden sind und geeignet sind, das Telefongeraet von der Telefonleitung abzukoppeln und es erlauben, dass die Signale von der Nebenstellenkontrolleinheit an die Telefonleitung gesendet werden,

**dadurch gekennzeichnet**, dass diese Nebenstellenkontrolleinheit eine zweite Nebenstelleneinheit aufweist, die so ausgebildet ist, dass im Falle einer Erkennung von vorbestimmten Gegebenheiten die Kontrolleinheit angerufen wird und im Falle dass zwei Nebenstelleneinheiten mit der gleichen Telefonleitung verbunden sind, zur Vermeidung, dass das Rufsignal der einen die Taetigkeit der anderen stoert, die Nebenstellenrufeinheit Einrichtungen aufweist, die es ermoeglichen, eine festgelegte Zeitperiode abzuwarten, bevor die letzten Zahl der gewaehlten Telefonnummer der angerufenen Einheit gewaehlt wird.

8. System zur Kontrolle der Taetigkeit eines oder mehrerer Geraete oder Anlagen, nach Patentanspruch 7, **dadurch gekennzeichnet**, dass die vorgenannte Zeitperiode wenigstens 20 Sekunden betraegt.

9. System zur Kontrolle der Taetigkeit eines oder mehrerer Geraete oder Anlagen, nach Patentanspruch 7, **dadurch gekennzeichnet**, dass die Nebenstellenkontrolleinheit so ausgebildet ist, dass

a) fuer den Fall, dass waehrend der zweiten Zeitperiode keine Rufimpulse festgestellt werden, das Telefongeraet von der Telefonleitung abgekoppelt wird und wenigstens eine Telefonnummer der zentralen Kontrolleinheit angewaehlt wird und fuer den Fall, dass diese Zentraleinheit den Anruf bestaetigt, die Signale von der Nebenstelleneinheit an die Leitung gesendet werden; und
b) eine Wiederherstellung der Ausgangslage der Verkabelung zwischen der Telefonleitung und Telefongeraet sowie der Nebenstelleneinheit dann erfolgt, wenn die Informationsuebertragung zwischen der Nebenstelleneinheit und der Zentraleinheit ueber die Telefonleitung beendet ist.